# EUROPEAN PATENT SPECIFICATION

(11) **EP 3 300 842 B1**
(45) Date of publication and mention of the grant of the patent: **03.03.2021**
(21) Application number: 15894383.7
(22) Date of filing: 13.11.2015
(51) Int. Cl.: B25J 13/08, B25J 19/00, G05D 3/00, G05D 1/00, B64C 39/02, G05D 1/02, G05D 1/08

(54) **SYSTEM AND METHOD FOR COORDINATING TERRESTRIAL MOBILE AUTOMATED DEVICES**
SYSTEM UND VERFAHREN ZUR KOORDINATION VON TERRESTRISCHEN MOBILEN AUTOMATISIERTEN VORRICHTUNGEN
SYSTÈME ET PROCÉDÉ POUR COORDONNER DES DISPOSITIFS AUTOMATISÉS MOBILES TERRESTRES

(30) Priority: 05.06.2015 RU 2015121583; 05.06.2015 RU 2015121582
(43) Date of publication of application: 04.04.2018
(73) Proprietor: Ariel Scientific Innovations Ltd., 40700 Ariel (IL)
(72) Inventor: KUPERVASSER, Oleg Yurevich, Ariel 4071303 (IL)
(74) Representative: Harrison IP Limited
(86) International application number: PCT/RU2015/000773
(87) International publication number: WO 2016/195532

(56) References cited:
- WO-A1-2014/074026
- WO-A1-2015/039045
- RU-U1- 131 276
- US-A1- 2005 113 987
- US-A1- 2015 142 250
- 'Introducing Project Zero: an all-electric, tiltrotor, helicopter- aeroplane hybrid.Wired.co.uk' MAGAZINE ARCHIVE, [Online] November 2013, XP055335184 Retrieved from the Internet: <URL:http://www.wired.co.Uk/magazine/archiv e/2013/I I/start/heli-plane>

## Description

### FIELD OF THE INVENTION

The disclosed technical solutions relate to systems and methods for controlling automated devices and can be used for coordinating terrestrial mobile automated devices (automatic transport, automatic agricultural machinery, municipal vehicles and airport vehicles, lawnmowers, etc.) hereinafter referred to as "robots".

### BACKGROUND OF THE INVENTION

One of the major issues in the field of video navigation, coordination and control over robots is a lack of a cheap and reliable navigation and mutual situational coordination system. For example, in order to prevent a lawnmower robot from leaving a designated grass mowing territory, the territory has to be bounded using wire (see the Internet publication http://www.therobotreport.com/news/robot-lawnmowers-still-a-work-in-progress from June 15th, 2012).

Systems of infrared fences or markers have been recently proposed. A system of terrestrial radio beacons is also known in the art. However, this approach complicates the system significantly.

The use of GPS and even more accurate DGPS systems has a number of following drawbacks:
1) GPS signal in close proximity to houses can be suppressed, re-reflected or simply jammed with noise accidentally or on purpose, leading to robot coordination failure;
2) Boundary coordinates for the area of operation (e.g., mowing area for a lawnmower robot) need to be measured and specified for the robot, which is a labor-intensive process;
3) Such systems provide coordinates but not robot orientation;
4) Robot orientation is based on abstract coordinates as opposed to the factual environment surrounding the robot (so when a stationary or moving obstacle (e.g., a dog or a child) is encountered, the system will not detect it);
5) Such systems cannot detect portions of the area containing grass yet to be mowed;
6) Using only DGPS or GPS, it is difficult to establish mutual coordination between robots unaware of each other's position, requiring a complex system for mutual detection and signal exchange;
7) Satellite systems are expensive.

Many of the above drawbacks could be solved by a video navigator installed on the robot. However, in such a solution, the navigator has a limited field of view, and this problem can be overcome only by installing a large number of wide angle cameras, thus complicating the system significantly. Furthermore, this solution necessitates installation of a number of distinct terrestrial markers. Natural landmark may not possess the required properties; therefore, the mowing area needs to be clearly marked using terrestrial markers. The mutual coordination between robots remains a complicated method including the use of a complex artificial vision system and a decentralized object recognition system. A decentralized system for controlling coordinated co-operation is much more complex and expensive than a single centralized system.

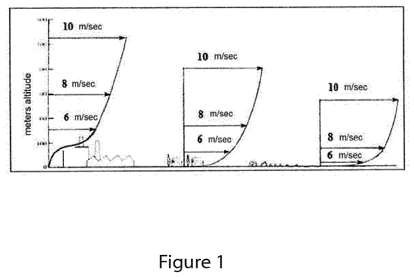

A utility model No. 131276 "Device for Coordinating Automated Devices" published on 20.08.2013, and a patent application No. 2012147923 "Method for Navigating and Joint Coordinating Automated Devices" published on 20.05.2014 are known in the art. In contrast to systems utilizing GPS, in the above system tracking devices (one or more cameras) are arranged above the monitored area prior to starting robot operation, wherein positions and height at which the devices are suspended are selected to cover the entire monitored area. Therefore, in contrast to GPS systems which are positioned irrespective of robot coordination targets, the tracking devices are positioned specifically to ensure convenient robot coordination, thus solving GPS-related problems such as signal suppression and re-reflection. It should be noted that GPS satellites do not constitute environment or robot tracking devices for which the coordinates need to be established. Conversely, the robots themselves are tracking devices for the GPS satellites, and robot coordinates can only be determined using GPS at the robot itself and only when three or more GPS satellites are present in the available area of space. In the prior art publications, effective determination of coordinates (spatial and angular) and mutual robot coordination are provided by a device for coordinating robot activity comprising airborne means or means arranged on a mast for tracking robots in a monitored area and monitoring the environment thereof including natural and artificial markers; a unit for determining coordinates of the airborne means is mounted on the device, the unit configured for exchanging data with another unit arranged on said device and adapted to determine coordinates of the monitored robot, wherein said unit is configured for receiving and transmitting control commands and signals to the monitored robot. The elevated airborne device or device arranged on a mast can comprise:
1. An unmanned aerial vehicle (UAV),
2. An antenna tower,
3. A tethered elevated continuous surveillance platform (such as tethered aerostats or sounding balloons),
4. Tethered aerodynamic rotary-wing devices powered by electrical energy supplied to the rotor blades (analogous to the Hovermast-100 tethered hovering platforms by Skysapience),
5. Tethered rotary-wing aerial vehicles with aerodynamic unloading provided by upper-air wind energy (autogyration) constantly present at high altitudes (approximately 4 m/s at the height of 100 m, Fig. 1), e.g. tethered autogyros and gyroplanes (analogous to Fa330 tethered autogyros used by the German forces in World War II).

However, each of the above methods has the following disadvantages:
1) The UAV are expensive and difficult to control and calculate, the continuous surveillance time thereof is limited,
2) Towers are difficult to install and position or reposition,
3) Tethered aerostats or sounding balloons require a complex pumping mechanism and are inconvenient for stabilizing,
4) Tethered aerodynamic rotary-wing aircraft requires a lot of power,

And tethered autogyros and gyroplanes are incapable of flight in zero-wind conditions.

US patent publication 2005/0113987 teaches a multi-agent autonomous system for exploration of hazardou or inaccesible locations that includes surface-based agents controlled by an airborne tracking and command system. In some embodiments, the airborne tracking and command system is borne by an optionally-tethered lighter-than-air aircraft with the attendant disadvantages as described above. In alternate embodiments, the airborne tracking and command system is borne by a heavier-than-air aircraft such as a glider, airplane or helicopter with the attendant disadvantages as described above.

PCT patent publication WO2015/039045 relates to methods for transitioning a tethered aerial vehicle between hover flight and crosswind flight.

US patent publication 2015/0142250 relates to an autonomous vehicle platform and system for selectively performing an in-season management task in an agricultural field while self-navigating between rows of planted crops.

### TECHNICAL OBJECT

The technical object of the present invention is to provide a system and method for coordinating robots effectively based on using robot tracking devices positioned at masts or aerial vehicles over the monitored area and monitoring the environment thereof, including natural and artificial markers. The technical result is identical to the technical object.

### SUMMARY

The technical object is solved by a system for navigating and joint coordinating one or more robots positioned in a monitored area, the system comprising one or more robot tracking devices mounted on suspended platforms, natural or artificial markers, a central unit receiving all data from all tracking devices, for determining coordinates and orientation of robots, the system characterized in that at least one suspended platform is a rotor device configured for operation in the following modes of:
a) autogyro, driven by the oncoming air stream;
b) wind motor, powered by the oncoming wind, and
c) helicopter, powered by a terrestrial charger,
   wherein the system comprises a central computing unit arranged on the suspended platform, or on the ground, or on the charging device, or on the robot, the unit configured for determining coordinates, determining orientation of system elements, and forming control commands based on data received from all devices described hereinabove.

The rotor aerial vehicle can be connected to the charger or the robot by a cable for receiving energy therefrom and transferring energy thereto. The system can further comprise at least one upper hemisphere tracking device mounted on the surface of the monitored area or on the robots and configured for receiving data from the central computing unit and for transferring data thereto, and at least one device for converting solar energy into electrical energy, the device positioned on the rotor aerial vehicle and/or the robot and/or the surface of monitored area. The device for converting solar energy can be configured for transferring energy to at least one charger for charging batteries of at least one robot and/or at least one rotor aerial vehicle in the helicopter flight mode. At least one rotor aerial vehicle can be configured for transferring energy generated in the wind motor mode to an energy storage device arranged on the rotor aerial vehicle and/or to at least one robot and/or to at least one charger for further use in the helicopter flight mode.

The rotor device can further be used as a security drone for home or garden.

The object is further solved by a method for navigating and joint coordinating one or more robots positioned in a monitored area, the method including the use of one or more robot tracking devices mounted on one or more suspended platforms formed by rotor devices configured for operation in the following modes: a) autogyro, driven by the oncoming air stream; b) wind motor, powered by the oncoming wind, and c) helicopter, powered by a terrestrial charger, natural or artificial markers, a central unit receiving all data from all tracking devices, for determining coordinates and orientation of robots, the method characterized in that the suspended platform is switched to a) the wind motor mode, charging the batteries when wind is present and no area processing required, b) the autogyro mode or the combined autogyro and wind motor mode, charging the batteries when wind is present and area processing is required, c) the helicopter motor mode powered by the batteries when area processing is required in zero-wind conditions.

According to the method, the central unit is placed on the suspended platform, or on the ground, or on the charger, or on the robot.

According to the method, the tethered platform is attached to the robot charger or directly to one of the controlled robots via a cable.

According to the method, the upper hemisphere tracking devices are placed on the ground or on the terrestrial robots, and data from said devices is also sent to the central control system.

According to the method, energy is generated using solar panels arranged on the suspended platforms, on the ground or on the robots, and said energy is used for charging batteries or supplied to the robots or to the suspended platforms for providing flight in the helicopter mode.

According to the method, energy from the tethered platforms generated by the oncoming air stream caused by high-altitude wind (autogyration) is used for aerodynamic unloading or charging batteries, or for powering the robots, or for providing flight in the helicopter mode.

### BRIEF DESCRIPTION OF THE DRAWINGS

Fig. 1 is a graph depicting the relationship between wind force and altitude for various localities: city, rural town, village.
Fig. 2 depicts embodiments of the present invention. The following reference numerals are used: tethered unmanned aerial vehicle (tethered UAV) 1, charger and control device 2, camera(s) 3; ground markers 4 and robot markers 5; and a natural marker depicted as a bush 6.

### DETAILED DESCRIPTION OF THE INVENTION

The present invention provides a centralized robot control system and increases accuracy in determining robot coordinates (spatial and angular).

The use of tethered platforms with surveillance devices which can be operated in three different modes (autogyro mode, wind motor mode, helicopter mode) provides effective robot coordination based on using robot tracking devices positioned at masts or aerial vehicles over the monitored area and monitoring the environment thereof, including natural and artificial markers.

The combined operation in different modes complements each mode and compensates for drawbacks thereof.

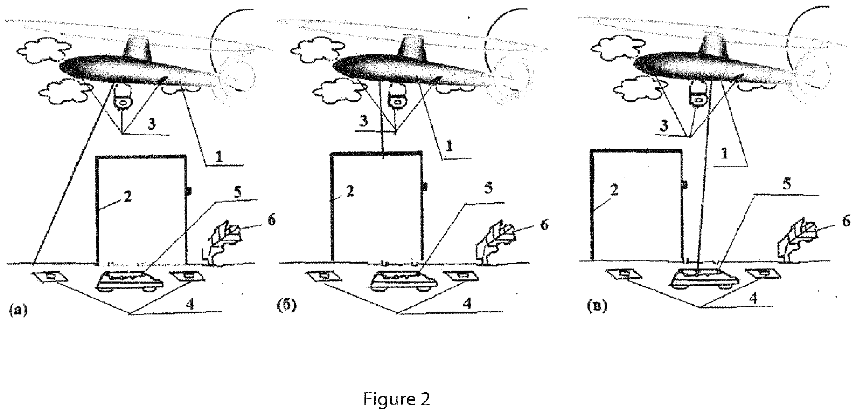

The solution is illustrated in Fig. 2, showing three exemplary embodiments (a, b, c) of the disclosed system. Fixedly mounted cameras covering the entire lower hemisphere are mounted on a suspended platform. Such arrangement is cheaper than using one adjustable camera, while a wired communications channel (fiber-optic or twisted pair) is reliable and high-capacity. Multiple cameras can be arranged on the tethered platform and on the suspender thereof at a required low altitude. The tethered platforms are attached to the ground via a cable (Fig. 2a), tethered to the energy storage and supply device via a cable (Fig. 2b), or attached directly to one of the robots in the monitored area (Fig. 2c).

Energy can also be generated by solar panels mounted on the tethered platform, on the ground, or on the robots.

In the disclosed solution, relative (differential) video positioning of the robots can be arranged with respect to the area or with respect to the aerial vehicle (or mast). Coordinates of the surveillance UAV may not be necessary to coordinate robot operation from the aerial vehicle (or mast). The invention can provide precise relative positioning of robots with respect to 3 or more special markers, fixed terrestrial objects, and other terrestrial robots.

Accurate UAV coordinates do not guarantee providing accurate coordinates of terrestrial robots. However, such UAV coordinates (position and orientation thereof) can be required for correcting projection distortions on the obtained images.

The present invention provides passive video surveillance in both natural and artificial light. The all-weather capability is provided by infrared and radar sight, by passive reflectors and active infrared markers, by infrared LEDs, etc.

The use of several surveillance cameras over the monitored area (in various combinations of fixed cameras and cameras arranged on tethered high-altitude platforms) provides increased reliability and stereoscopic positioning accuracy, and eliminates blind spots (e.g., behind trees and under tree branches).

Markers easily distinguishable from above can be placed on the robot, on the charger thereof, and on the ground.

The central unit receiving all data from all tracking devices determines coordinates and orientation of the at least one controlled robot (both relative (differential) video positioning of the robot with respect to the area and with respect to tracking devices (cameras)) and, if necessary, determines coordinates and orientation of the tracking devices. Said unit is configured for transmitting control commands and signals (including RF signals) to the robots, tracking devices, and chargers, further providing the possibility of exchanging control and data signals among said devices.

When multiple robots are used, the centralized coordination thereof is simple: the cameras see all robots at the same time, and a unified computer system receiving said data provides coordination of the mutual movement of the robots. Boundaries for the operating area (e.g. mowing boundaries for a lawnmower robot) can be set by specifying (e.g., using a mouse cursor or by drawing with a stylus or user's finger on a touch screen) boundaries on the computer system screen showing an image of the area.

The disclosed system is operated as follows: initially, at least one robot is placed in the monitored area (e.g., on a lawn). Tracking devices (one or more cameras) mounted on aerial vehicles or masts are arranged above the monitored area prior to starting robot operation, wherein positions and height at which the devices are suspended are selected to cover the entire monitored area.

In another example, the tracking device at the start of the operation process is located on the ground or on one of the robots; then, during operation, the device can take flight, fly or land on masts for tracking robots in the monitored area.

The devices for tracking suspended platforms can be placed on the ground or on the robots, thus providing determination of mutual position and orientation between tracking devices and robots, and further allowing to determine the robot rotation angle more accurately and to determine robot position in camera blind spots (under canopies and trees) by performing orientation based on canopy surfaces and tree leaves visible above the robot.

Furthermore, other spectral regions can be used instead of the visible signal. In this case, the signal is not necessarily natural and can be generated by a robot or by a device arranged on the camera or at a different point in space. Other useable signals include audio signals, ultrasound signals, radar signals, as well as sensors and markers such as olfactory or chemical signals or radioactivity slightly above the ambient level (e.g., silicon slabs).

The object is solved by the disclosed method for navigating and joint coordinating one or more robots positioned in a monitored area by routing each robot based on data comprising coordinates of obstacles, of the processed area boundaries, of the monitored area boundaries, and of all robots in said area. In order to provide operation of robots in the monitored area, especially in sections of the monitored area where the signal from GPS satellites is either re-reflected or suppressed, devices for tracking robots in the monitored area and surveying the environment thereof are positioned on one or more tethered platforms above the monitored area prior to starting robot operation. The tracking devices are natural or artificial markers configured for transmitting data regarding the monitored area and objects present therein to each or some of the robots in said area. Based on the data from tracking devices, each or some robots provide determination of coordinates of obstacles, of the processed area boundaries, of the monitored area boundaries, and of all robots used in said area; furthermore, control signals are exchanged between the tracking device and the automated devices in the monitored area in order to establish mutual coordination. The method is characterized in that at least one suspended platform is a rotor device configured for operation in the following modes: autogyro mode, driven by the oncoming air stream; wind motor mode, powered by the oncoming wind, and helicopter mode, powered by a terrestrial charger.

Therefore, when wind is present and area processing is not required, the suspended platform operates in the wind motor mode, charging the batteries. When wind is present and area processing is required, the suspended platform operates in the autogyro mode or in the combined autogyro and wind motor mode, charging the batteries. When area processing is required in zero-wind conditions, the suspended platform operates in the helicopter mode powered by the batteries. The system comprises a central computing unit arranged on the suspended platform, or on the ground, or on the charging device, or on the robot, the unit configured for determining coordinates, determining orientation of system elements, and forming control commands based on data received from all devices described hereinabove.

The present invention provides a centralized robot control system and increases accuracy in determining robot coordinates (spatial and angular).

The use of tethered platforms with surveillance devices which can be operated in three different modes (autogyro mode, wind motor mode, helicopter mode) provides effective robot coordination based on using robot tracking devices positioned at masts or aerial vehicles over the monitored area and monitoring the environment thereof, including natural and artificial markers.

The combined operation in different modes complements each mode and compensates for drawbacks thereof.

The method is illustrated in Fig. 2, showing three exemplary embodiments (a, b, c) of the disclosed method. Fixedly mounted cameras covering the entire lower hemisphere are mounted on a suspended platform. Such arrangement is cheaper than using one adjustable camera, while a wired communications channel (fiber-optic or twisted pair) is reliable and high-capacity. Multiple cameras can be arranged on the tethered platform and on the suspender thereof at a required low altitude. The tethered platforms are attached to the ground via a cable (Fig. 2a), tethered to the energy storage and supply device via a cable (Fig. 2b), or attached directly to one of the robots in the monitored area (Fig. 2c).

Energy can also be generated by solar panels mounted on the tethered platform, on the ground, or on the robots.

In the disclosed solution, relative (differential) video positioning of the robots can be arranged with respect to the area or with respect to the aerial vehicle (or mast). Coordinates of the surveillance UAV may not be necessary to coordinate robot operation from the aerial vehicle (or mast). The invention can provide precise relative positioning of robots with respect to 3 or more special markers, fixed terrestrial objects, and other terrestrial robots.

Accurate UAV coordinates do not guarantee providing accurate coordinates of terrestrial robots. However, such UAV coordinates (position and orientation thereof) can be required for correcting projection distortions on the obtained images.

The present invention provides passive video surveillance in both natural and artificial light. The all-weather capability is provided by infrared and radar sight, by passive reflectors and active infrared markers, by infrared LEDs, etc.

The use of several surveillance cameras over the monitored area (in various combinations of fixed cameras and cameras arranged on tethered high-altitude platforms) provides increased reliability and stereoscopic positioning accuracy, and eliminates blind spots (e.g., behind trees and under tree branches).

Markers easily distinguishable from above can be placed on the robot, on the charger thereof, and on the ground.

The central unit receiving all data from all tracking devices determines coordinates and orientation of the at least one controlled robot (both relative (differential) video positioning of the robot with respect to the area and with respect to tracking devices (cameras)) and, if necessary, determines coordinates and orientation of the tracking devices. Said unit is configured for transmitting control commands and signals (including RF signals) to the robots, tracking devices, and chargers, further providing the possibility of exchanging control and data signals among said devices.

When multiple robots are used, the centralized coordination thereof is simple: the cameras see all robots at the same time, and a unified computer system receiving said data provides coordination of the mutual movement of the robots. Boundaries for the operating area (e.g. mowing boundaries for a lawnmower robot) can be set by specifying (e.g., using a mouse cursor or by drawing with a stylus or user's finger on a touch screen) boundaries on the computer system screen showing an image of the area.

The disclosed system is operated as follows: initially, at least one robot is placed in the monitored area (e.g., on a lawn). Tracking devices (one or more cameras) mounted on aerial vehicles or masts are arranged above the monitored area prior to starting robot operation, wherein positions and height at which the devices are suspended are selected to cover the entire monitored area.

In another example, the tracking device at the start of the operation process is located on the ground or on one of the robots; then, during operation, the device can take flight, fly or land on masts for tracking robots in the monitored area.

The devices for tracking suspended platforms can be placed on the ground or on the robots, thus providing determination of mutual position and orientation between tracking devices and robots, and further allowing to determine the robot rotation angle more accurately and to determine robot position in camera blind spots (under canopies and trees) by performing orientation based on canopy surfaces and tree leaves visible above the robot.

Furthermore, other spectral regions can be used instead of the visible signal. In this case, the signal is not necessarily natural and can be generated by a robot or by a device arranged on the camera or at a different point in space. Other useable signals include audio signals, ultrasound signals, radar signals, as well as sensors and markers such as olfactory or chemical signals or radioactivity slightly above the ambient level (e.g., silicon slabs).

The surveillance system can detect obstacles or moving objects and can determine grass height and quality of lawn mowing. The system is simple in implementation and inexpensive.

The present system can be used with a wide variety of robots: automated lawnmowers, indoor cleaning robots, tractors, snowplows, garbage removal and street flushing vehicles, transporting vehicles for transporting people and goods, agricultural vehicles, municipal vehicles, transport vehicles, etc. The present system can be used with robots utilized on other planets, e.g. with Mars rovers.

## Claims

1. A system for navigating and joint coordinating one or more robots positioned in a monitored area, the system comprising one or more suspended tethered platforms (1), one or more robot tracking devices (3) mounted on said suspended tethered platforms (1), natural or artificial markers (4, 5), a central unit (2) configured to receive data from said robot tracking devices (3) mounted on said suspended tethered platforms (1), said central unit (2) configured for determining coordinates and orientation of said robots, determining orientation of system elements, and forming control commands based on data received from said robot tracking devices (3), the system **characterized in that** at least one of said suspended tethered platforms (1) is a rotor device configured for operation in the following modes:
a) autogyro, driven by the oncoming air stream;
b) wind motor, powered by the oncoming wind, and
c) helicopter, powered by a terrestrial charger .

2. The system according to claim 1, **characterized in that** the at least one of said suspended tethered platforms (1) is connectable to a charging device (2) or to one of said robots by a cable for receiving energy therefrom and transferring energy thereto.

3. The system according to claim 1, further comprising at least one upper hemisphere tracking device mountable on the surface of the monitored area or on one of said robots and configured for receiving data from the central unit (2) and for transferring data thereto.

4. The system according to claim 1, further comprising at least one device for converting solar energy into electrical energy, the device positioned on the at least one of said suspended tethered platforms (1) and/or positionable on one of said robots and/or positionable on the surface of the monitored area.

5. The system according to claim 4, **characterized in that** the device for converting solar energy is configured for transferring energy to said charging device (2) for charging batteries of the one of said robots and/or the at least one of said supended tethered platforms (1) in the helicopter flight mode.

6. The system according to claim 1, **characterized in that** the at least one of said suspended tethered platforms (1) is configured for transferring energy generated in the wind motor mode to an energy storage device arranged on the at least one of said suspended tethered platform (1) and/or to one of said robots and/or to the charging device (2) for further use in the helicopter flight mode.

7. The system according to claim 1, **characterized in that** the rotor device can be used as a security drone for home or garden.

8. A method for navigating and joint coordinating one or more robots positioned in a monitored area, the method including the use of the system of any one of claims 1 to 7, wherein the rotor device is switched to
a. the wind motor mode, charging batteries when wind is present and no area processing required,
b. the autogyro mode or a combined autogyro and wind motor mode, charging batteries when wind is present and area processing is required,
c. the helicopter motor mode powered by batteries when area processing is required in zero-wind conditions.

## Patentansprüche

1. System zur Navigation und gemeinsamen Koordination eines oder mehrerer Roboter, die sich in einem überwachten Bereich befinden, wobei das System eine oder mehrere aufgehängte angebundene Plattformen (1) umfasst, eine oder mehrere Roboter-Trackingvorrichtungen (3) an den aufgehängten angebundenen Plattformen (1), natürliche oder künstliche Markierungen (4, 5), eine Zentraleinheit (2), die für den Empfang von Daten von den Roboter-Trackingvorrichtungen (3) gestaltet sind, die an den aufgehängten angebundenen Plattformen (1) angebracht sind, wobei die Zentraleinheit (2) gestaltet ist zur Bestimmung von Koordinaten und einer Ausrichtung der Roboter, zur Bestimmung der Ausrichtung von Systemelementen und zur Erzeugung von Steuerbefehlen auf der Basis von Daten, die von den Roboter-Trackingvorrichtungen (3) empfangen werden, wobei das System **dadurch gekennzeichnet ist, dass** mindestens eine der aufgehängten angebundenen Plattformen (1) eine Rotorvorrichtung ist, die für einen Betrieb in den folgenden Modi gestaltet ist:
a) Autogyro, angetrieben durch den anströmenden Luftstrom;
b) Windmotor, angetrieben durch den anströmenden Wind; und
c) Helikopter, angetrieben durch eine terrestrische Ladevorrichtung.

2. System nach Anspruch 1, **dadurch gekennzeichnet, dass** die mindestens eine der aufgehängten angebundenen Plattformen (1) mit einer Ladevorrichtung (2) oder mit einem der Roboter durch ein Kabel verbunden werden kann, um davon Energie zu empfangen und Energie an die Vorrichtung zu übertragen.

3. System nach Anspruch 1, das ferner mindestens eine Trackingvorrichtung für die obere Hemisphäre umfasst, die an der Oberfläche des überwachten Bereichs angebracht werden kann oder an einem der Roboter, und die für den Empfang von Daten von der Zentraleinheit (2) und zur Übertragung von Daten zu dieser gestaltet ist.

4. System nach Anspruch 1, das ferner mindestens eine Vorrichtung zur Umwandlung von Solarenergie in elektrische Energie umfasst, wobei die Vorrichtung an der mindestens einen der aufgehängten angebundenen Plattformen (1) positioniert ist und/oder an einem der Roboter positioniert werden kann und/oder an der Oberfläche des überwachten Bereichs positioniert werden kann.

5. System nach Anspruch 4, **dadurch gekennzeichnet, dass** die Vorrichtung zur Umwandlung von Solarenergie so gestaltet ist, dass sie Energie zum Laden von Batterien des einen der Roboter und/oder der mindestens einen der aufgehängten angebundenen Plattformen (1) in dem Helikopter-Flugmodus an die Ladevorrichtung (2) überträgt.

6. System nach Anspruch 1, **dadurch gekennzeichnet, dass** die mindestens eine der aufgehängten angebundenen Plattformen (1) gestaltet ist für die Übertragung von in dem Windmotor-Modus erzeugter Energie an eine Energiespeichervorrichtung, die an der mindestens einen aufgehängten angebundenen Plattform (1) angeordnet ist, und/oder an die Ladevorrichtung (2) zur weiteren Verwendung in dem Helikopter-Flugmodus.

7. System nach Anspruch 1, **dadurch gekennzeichnet, dass** die Rotorvorrichtung als Sicherheitsdrohne für den privaten Haushalt oder Garten eingesetzt werden kann.

8. Verfahren zur Navigation und gemeinsamen Koordination eines oder mehrerer Roboter, die sich in einem überwachten Bereich befinden, wobei das Verfahren den Einsatz des Systems nach einem der Ansprüche 1 bis 7 umfasst, wobei die Rotorvorrichtung wie folgt geschaltet ist:
a. in den Windmotor-Modus, in dem Batterien geladen werden, wenn Wind vorhanden ist und keine Gebietsverarbeitung erforderlich ist;
b. in den Autogyro-Modus oder einen kombinierten Autogyro- und Windmotor-Modus, in dem Batterien geladen werden, wenn Wind vorhanden ist und wenn eine Gebietsverarbeitung erforderlich ist;
c. in den Helikopter-Motormodus, angetrieben durch Batterien, wenn eine Gebietsverarbeitung unter windstillen Bedingungen erforderlich ist.

## Revendications

1. Système de navigation et de coordination conjointe d'au moins un robot positionné dans une zone surveillée, le système comprenant au moins une plate-forme attachée suspendue (1), au moins un dispositif de suivi de robot (3) monté sur lesdites plates-formes attachées suspendues (1), des marqueurs naturels ou artificiels (4, 5), une unité centrale (2) conçue pour recevoir des données provenant desdits dispositifs de suivi de robot (3) montés sur lesdites plates-formes attachées suspendues (1), ladite unité centrale (2) étant conçue pour déterminer les coordonnées et l'orientation desdits robots, déterminer l'orientation des éléments de système, et former des instructions de commande sur la base des données reçues desdits dispositifs de suivi de robot (3),
le système étant **caractérisé en ce que**
au moins une desdites plates-formes attachées suspendues (1) est un dispositif à rotor conçu pour fonctionner dans les modes suivants :
a) autogire, entraîné par le courant d'air entrant ;
b) moteur éolien, alimenté par le vent entrant, et
c) hélicoptère, alimenté par un chargeur terrestre.

2. Système selon la revendication 1, **caractérisé en ce que** l'au moins une desdites plates-formes attachées suspendues (1) peut être connectée à un dispositif de charge (2) ou à un desdits robots par un câble pour recevoir de l'énergie de celui-ci et lui transférer de l'énergie.

3. Système selon la revendication 1, comprenant en outre au moins un dispositif de suivi d'hémisphère supérieur pouvant être monté sur la surface de la zone surveillée ou sur un desdits robots et conçu pour recevoir des données de l'unité centrale (2) et pour lui transférer des données.

4. Système selon la revendication 1, comprenant en outre au moins un dispositif pour convertir l'énergie solaire en énergie électrique, le dispositif étant positionné sur l'au moins une desdites plateformes attachées suspendues (1) et/ou pouvant être positionné sur un desdits robots et/ou pouvant être positionné sur la surface de la zone surveillée.

5. Système selon la revendication 4, **caractérisé en ce que** le dispositif de conversion de l'énergie solaire est conçu pour transférer de l'énergie audit dispositif de charge (2) pour charger les batteries de l'un desdits robots et/ou de l'au moins une desdites plates-formes attachées suspendues (1) en mode de vol d'hélicoptère.

6. Système selon la revendication 1, **caractérisé en ce que** l'au moins une desdites plateformes attachées suspendues (1) est conçue pour transférer l'énergie générée en mode moteur éolien à un dispositif de stockage d'énergie disposé sur l'au moins une desdites plateformes suspendues (1) et/ou à un desdits robots et/ou au dispositif de charge (2) pour une utilisation ultérieure en mode vol d'hélicoptère.

7. Système selon la revendication 1, **caractérisé en ce que** le dispositif de rotor peut être utilisé comme un drone de sécurité pour la maison ou le jardin.

8. Procédé de navigation et de coordination conjointe d'au moins un robot positionné dans une zone surveillée, le procédé comprenant l'utilisation du système selon l'une quelconque des revendications 1 à 7, le dispositif de rotor étant commuté en
a. mode moteur éolien, chargeant les batteries en présence de vent et ne nécessitant pas de traitement de zone,
b. mode autogyre ou mode combiné autogyre et moteur éolien, chargeant les batteries en présence de vent et nécessitant un traitement de zone,
c. mode moteur d'hélicoptère alimenté par des batteries lorsque le traitement de zone est nécessaire dans des conditions de vent nul.
